# EUROPÄISCHE PATENTSCHRIFT

(11) **EP 3 085 054 B1**
(45) Veröffentlichungstag und Bekanntmachung des Hinweises auf die Patenterteilung: **03.10.2018**
(21) Anmeldenummer: 14837098.4
(22) Anmeldetag: 06.12.2014
(51) Int. Cl.: H04L 29/06, B64D 7/00, H04L 29/08

(54) **AUSSENLAST FÜR EIN LUFTFAHRZEUG MIT UNIVERSELLER ANSTEUERSCHNITTSTELLE**
EXTERNAL LOAD FOR AN AIRCRAFT HAVING A UNIVERSAL CONTROL INTERFACE
CHARGE EXTERNE POUR UN AÉRONEF AVEC INTERFACE DE COMMANDE UNIVERSELLE

(30) Priorität: 19.12.2013 DE 102013021689
(43) Veröffentlichungstag der Anmeldung: 26.10.2016
(73) Patentinhaber: Airbus Defence and Space GmbH, 85521 Ottobrunn (DE)
(72) Erfinder: KUTKA, Joachim, 86633 Neuburg (DE)
(74) Vertreter: LKGLOBAL Lorenz & Kopf PartG mbB Patentanwälte
(86) Internationale Anmeldenummer: PCT/DE2014/000623
(87) Internationale Veröffentlichungsnummer: WO 2015/090264

(56) Entgegenhaltungen:
- EP-A2- 2 053 480
- WO-A2-2008/121431
- US-A- 5 548 510

## Beschreibung

### Gebiet der Erfindung

Die vorliegende Erfindung betrifft eine Außenlast für ein Luftfahrzeug und ein Luftfahrzeug mit einer solchen Außenlast. Die Außenlast ist ausgeführt, zumindest eine Nutzlast in Form eines Funktionsmoduls aufzunehmen.

### Hintergrund der Erfindung

Luftfahrzeuge können Außenlasten aufweisen, welche ausgeführt sein können, bestimmte Funktionen durchzuführen. Eine Außenlast kann z.B. ein Treibstofftank oder ein Sensor, beispielsweise ein Bildsensor, sein.

Die Außenlasten bzw. die in einer Außenlast eines Luftfahrzeugs beherbergten Funktionsmodule werden über Steuerelemente gesteuert, welche in dem Luftfahrzeug angeordnet sind. Die Funktionsmodule können auch eine Rückmeldung an das Luftfahrzeug bereitstellen, z.B. Bildsignale oder Statussignale, welche auf einer Anzeigeeinheit in dem Luftfahrzeug dargestellt werden. In einem beispielhaften Fall kann es sich bei der Anzeigeeinheit um ein Display zur Darstellung von dynamischen Inhalten oder um eine Signallampe zur Darstellung zweier Zustände entsprechend dem Betriebsstatus der Signallampe (an/aus) handeln.

In Abhängigkeit der Funktionen eines Funktionsmoduls kann es dabei erforderlich sein die Steuerelemente bzw. die Anzeigeeinheiten in dem Luftfahrzeug an die Funktionen und die Rückmeldungen anzupassen, welche von einem Funktionsmodul bereitgestellt bzw. zurück übertragen werden.

Eine solche Anpassung kann zum Einen die Steuerelemente und ggf. die Anzeigeeinheit beeinträchtigen und Anpassungen erfordern und zum Anderen eine abweichende Art und Weise der Signalübertragung bzw. Steuerdatenübertragung erfordern.

Im Falle von Änderungen an einem Luftfahrzeug kann eine Überprüfung der Arbeitsweise der von den Änderungen beeinflussten Luftfahrzeugfunktionsmodulen und der damit interagierenden Luftfahrzeugfunktionsmodule oder gar des gesamten Luftfahrzeugs erforderlich sein, was einen nicht unerheblichen Aufwand und nicht unerhebliche Kosten mit sich bringen kann.

EP 2 053 480 A2 beschreibt eine Vorrichtung für ein Luftfahrzeug mit einer ersten Schnittstelle, welche ausgeführt ist, über ein erstes Protokoll mit einer Haltevorrichtung eines externen Flugkörpers zu kommunizieren. In dem externen Flugkörper ist eine Steuereinheit vorgesehen, welche Kommandos empfängt und für den externen Flugkörper umsetzt.

US 5,548,510 beschreibt ein Verfahren und eine Vorrichtung zum Bereitstellen einer einheitlichen elektrischen Schnittstelle zwischen einem Luftfahrzeug und einer externen Einheit. Es ist vorgesehen, dass auf einer luftfahrzeugseitigen Schnittstelle vorgegebene Signale genutzt werden, welche unmittelbar in einen anderen vorgegebenen Befehlssatz umgewandelt werden.

WO 2008/121431 A2 beschreibt eine Steuereinheit zum Integrieren einer Waffe in bestehende Elektronik eines Fahrzeugs, wobei die Waffe eine erste Schnittstelle zum Austausch von Signalen mit dem Fahrzeug und eine zweite Schnittstelle zum Austausch von Signalen mit der Waffe aufweist. Die erste Schnittstelle kann an ein wechselndes Fahrzeug angepasst werden, so dass die Waffe mit verschiedenen Fahrzeugen verwendet werden kann.

### Zusammenfassung der Erfindung

Es kann als Aufgabe der Erfindung betrachtet werden, eine Außenlast für ein Luftfahrzeug anzugeben, welche einen Anpassungsaufwand des Luftfahrzeugs an einen modifizierten Funktionsumfang einer Außenlast reduziert.

Diese Aufgabe wird gelöst durch den Gegenstand der unabhängigen Ansprüche. Weiterbildungen der Erfindung ergeben sich aus den abhängigen Ansprüchen und aus der folgenden Beschreibung.

Gemäß einem ersten Aspekt ist eine Außenlast für ein Luftfahrzeug angeben. Die Außenlast weist eine erste Steuereinheit und einen ersten Nutzlastraum zur Aufnahme einer ersten Nutzlast auf. Die erste Steuereinheit ist ausgeführt, mit dem Luftfahrzeug gekoppelt zu werden und Steuerdaten über ein erstes vorgegebenes Eingangssignalprotokoll mit dem Luftfahrzeug auszutauschen. Die erste Nutzlast ist als ein erstes Funktionsmodul zur Durchführung einer Funktion ausgeführt. Die Durchführung der Funktion von dem Luftfahrzeug wird durch Übertragung von Steuerdaten an die erste Steuereinheit initiiert. Die erste Steuereinheit ist ausgeführt, Steuerdaten gemäß einem ersten vorgegebenen Ausgangssignalprotokoll auszugeben. Die Außenlast ist dadurch gekennzeichnet, dass sie eine zweite Steuereinheit aufweist, wobei die zweite Steuereinheit so angeordnet ist, dass die Steuerdaten gemäß dem ersten vorgegebenen Ausgangssignalprotokoll als Eingangssignale für die zweite Steuereinheit dienen. Die zweite Steuereinheit ist weiterhin ausgeführt, die von ihr empfangenen Eingangssignale gemäß einem ersten Umsetzungsprotokoll in ein zweites Ausgangssignalprotokoll umzusetzen und an ein Steuerprotokoll des ersten Funktionsmoduls anzupassen.

In anderen Worten bedeutet dies, dass die erste Steuereinheit an eine Datenausgabeschnittstelle des Luftfahrzeugs und die zweite Steuereinheit an eine Dateneingabeschnittstelle der ersten Nutzlast, also des Funktionsmoduls, angepasst ist. Die zweite Steuereinheit erhält die Steuerdaten von der ersten Steuereinheit und setzt diese so um, dass die umgesetzten Daten als Kommandos für das Funktionsmodul genutzt werden.

Wird ein Funktionsmodul mit angepassten Funktionen oder mit einem angepassten Befehlssatz bereitgestellt, so reicht es aus, die zweite Steuereinheit an das angepasste Funktionsmodul anzupassen. Sowohl die erste Steuereinheit als auch die Datenausgabeschnittstelle des Luftfahrzeugs an die erste Steuereinheit bleiben gleich. Änderungen der Arbeitsweise des Luftfahrzeugs sowie der übertragenen Steuerdaten sind auf Grund des angepassten Funktionsmoduls nicht erforderlich.

Ein bestehender Steuerdatensatz zwischen dem Luftfahrzeug und der erste Steuereinheit wird durch die Umsetzung in der zweite Steuereinheit mit einer anderen Bedeutung belegt. Die Syntax des luftfahrzeugseitigen Steuerdatensatzes wird nicht geändert, lediglich dessen Semantik, da ein vorgegebenes Kommando auf der Datenausgabeschnittstelle des Luftfahrzeugs zu einer anderem Aktion bzw. Funktion in dem Funktionsmodul führt.

Der Begriff Protokoll ist im Sinne der Erfindung dahingehend zu verstehen, dass damit die elektronische Spezifikation der übertragenen Daten, die Art und Weise der Signalcodierung zur Übertragung von Daten ausgehend von einem ersten Element (z.B. einem Steuerelement in dem Luftfahrzeug) zu einem zweiten Element (z.B. der ersten Steuereinheit) und der Befehlssatz mit einer bestimmten vorgegebenen Menge von Befehlen zur Ansteuerung des zweiten Elements (z.B. der ersten Steuereinheit) gemeint ist. Die Steuerdaten zwischen dem ersten Element oder dem zweiten Element können insbesondere leitungsgebunden übertragen werden.

Die erste Steuereinheit kann eine vorgegebene Steuereinheit einer bestehenden Außenlast sein, z.B. einer Nutzlast mit diversen Sensoren oder Aktuatoren, wobei die vorgegebene Steuereinheit gleichbleibend verwendet wird und das Luftfahrzeug gleichbleibend mit der Außenlast wie oben und im Folgenden beschrieben Daten bidirektional austauscht, d.h. Daten an die erste Steuereinheit ausgibt und Daten von der ersten Steuereinheit empfängt.

Änderungen in den Funktionsmodulen können durch Anpassung des Umsetzungsprotokolls berücksichtigt werden. Das Luftfahrzeug und unmittelbar an dem Luftfahrzeug angeordnete Schnittstellen sowie die hierbei genutzten Protokolle sind gleichbleibend, womit beispielsweise ein Zulassungsaufwand für die Verwendung angepasster Funktionsmodule reduziert werden kann, weil die Änderungen sich nur auf das Umsetzungsprotokoll und die zweite Steuereinheit beziehen, aber nicht unmittelbar auf das Luftfahrzeug.

Das erste vorgegebene Eingangssignalprotokoll wird von der ersten Steuereinheit auf einer luftfahrzeugseitigen Schnittstelle empfangen und kann als primäres Eingangssignal bezeichnet werden.

Das erste vorgegebene Ausgangssignalprotokoll wird von der ersten Steuereinheit auf einer der zweiten Steuereinheit bzw. der Außenlast zugewandten Schnittstelle ausgegeben und kann als primäres Ausgangssignal bezeichnet werden.

Die zweite Steuereinheit nimmt das primäre Ausgangssignal auf ihrer luftfahrzeugseitigen bzw. der der ersten Steuereinheit zugewandten Schnittstelle als sekundäres Eingangssignal auf.

Die zweite Steuereinheit gibt ein sekundäres Ausgangssignal auf einer den Funktionsmodulen zugewandten Schnittstelle aus.

Der Datenfluss wurde oben ausgehend von dem Luftfahrzeug zu den Funktionsmodulen beschrieben. Die Schnittstellen sind jedoch ausgeführt, einen Rückkanal für einen Datenfluss von den Funktionsmodulen zu dem Luftfahrzeug aufzubauen, so dass für diesen Fall die Funktion der Schnittstellen betreffend Dateneingabe und Datenausgabe entsprechend umgekehrt ist.

Gemäß einer Ausführungsform ist die zweite Steuereinheit ausgeführt, ein zweites Umsetzungsprotokoll aufzunehmen.

Dies ermöglicht den Datenaustausch mit zwei verschiedenen Funktionsmodulen über dieselbe erste Steuereinheit mit einem gleichbleibenden ersten vorgegebenen Eingangssignalprotokoll, welches durch die erste Steuereinheit in ein erstes vorgegebenes Ausgangssignalprotokoll umgesetzt wird und als zweites Eingangssignalprotokoll für die zweite Steuereinheit dient. Die zweite Steuereinheit setzt das zweite Eingangssignalprotokoll mittels des Umsetzungsprotokolls in ein zweites Ausgangssignalprotokoll um.

Gemäß einer weiteren Ausführungsform weist die Außenlast eine Konfigurationsschnittstelle auf, welche mit der zweiten Steuereinheit gekoppelt ist und ausgeführt ist, ein Umsetzungsprotokoll an die zweite Steuereinheit zu übertragen.

Dies ermöglicht die dynamische Anpassung der Arbeitsweise der zweiten Steuereinheit an ein neues Funktionsmodul.
Gemäß einer weiteren Ausführungsform weist die Außenlast eine zweite Nutzlast auf, welche als zweites Funktionsmodul ausgeführt ist. Dabei ist die zweite Steuereinheit ausgeführt, das erste Funktionsmodul über das erste Umsetzungsprotokoll anzusteuern und das zweite Funktionsmodul über das zweite Umsetzungsprotokoll anzusteuern.

Gemäß einer weiteren Ausführungsform ist die zweite Steuereinheit ausgeführt, das erste Umsetzungsprotokoll und das zweite Umsetzungsprotokoll nebenläufig auszuführen.

Dies bedeutet, dass die beiden Umsetzungsprotokolle quasi-parallel ausgeführt werden, so dass die zweite Steuereinheit mehr als ein Funktionsmodul ansteuern kann.

Gemäß einer weiteren Ausführungsform besteht das Steuerprotokoll des ersten Funktionsmoduls aus diskreten Signalen.

Diese diskreten Signale können zwischen der zweiten Steuereinheit und dem Funktionsmodul über einen Datenbus mit einer Mehrzahl von Datenleitungen parallel oder über eine einzelne Leitung seriell übertragen werden.

Gemäß einer weiteren Ausführungsform werden über einen Rückkanal Daten von dem Funktionsmodul über die zweite Steuereinheit an die erste Steuereinheit übertragen und die erste Steuereinheit ist ausgeführt, die Daten des Rückkanals an das Luftfahrzeug zu übertragen.
Ein Rücksignal von dem Funktionsmodul an das Luftfahrzeug, welches über die zweite Steuereinheit und die erste Steuereinheit übertragen wird, kann insbesondere aus analogen Signalen bestehen.
Gemäß einer weiteren Ausführungsform weist die Außenlast ein Gehäuse auf und die erste Steuereinheit und die zweite Steuereinheit sind in dem Gehäuse angeordnet.

Das Gehäuse kann mit dem Luftfahrzeug über eine vorgegebene mechanische Schnittstelle gekoppelt werden. Dadurch, dass die erste Steuereinheit unabhängig von der Ansteuerung der Funktionsmodule ist, bleibt die Datenausgabeschnittstelle zwischen dem Luftfahrzeug und der Außenlast gleich. Ändert sich etwas an dem Funktionsmodul oder wird ein neues Funktionsmodul bereitgestellt, so ist eine Anpassung lediglich der zweiten Steuereinheit erforderlich, indem ein auf das neue Funktionsmodul angepasstes Umsetzungsprotokoll in die zweite Steuereinheit übertragen wird.
Gemäß einem weiteren Aspekt ist ein Luftfahrzeug mit einer Außenlast wie oben und im Folgenden beschrieben angegeben.
Gemäß einer Ausführungsform ist das Luftfahrzeug ausgeführt, Steuerdaten mit der ersten Steuereinheit auszutauschen, so dass durch das erste Funktionsmodul eine funktionsmodulspezifische Aktion ausgeführt wird.

In anderen Worten tauscht das Luftfahrzeug Daten in einer definierten Art und Weise mit der ersten Steuereinheit unabhängig von dem Funktionsmodul und dessen Arbeits- und Funktionsweise aus. Die erste Steuereinheit leitet einen Befehl an die zweite Steuereinheit weiter und die zweite Steuereinheit stellt ausgehend von diesem Befehl der erste Steuereinheit einen funktionsmodulspezifischen Befehl basierend auf dem Umsetzungsprotokoll und abhängig von dem Funktionsumfang des Funktionsmodul bereit um eine gewünschte Funktion zu starten bzw. durchzuführen.

Es sei darauf hingewiesen, dass die obigen Ausführungen selbstverständlich auch für mehr als zwei Funktionsmodule und mehr als zwei Umsetzungsprotokolle gelten. Die Anzahl der Funktionsmodule ist räumlich lediglich durch den zur Verfügung stehenden Nutzraum in dem Gehäuse der Außenlast begrenzt und funktional lediglich durch die Anzahl von Befehlen des ersten vorgegebenen Eingangssignalprotokolls bzw. des ersten vorgegebenen Ausgangssignalprotokolls der ersten Steuereinheit.

Das Gehäuse der Außenlast kann insbesondere von einem Treibstofftank stammen, dessen Innenraum mit den entsprechenden Nutzlasten bzw. Funktionsmodulen bestückt wird und ggf. in räumlich voneinander getrennte Nutzlasträume aufgeteilt wird.

Die erste Steuereinheit kann Bestandteil eines Zielbeleuchtungssimulators sein, welcher beispielsweise die Funktionen simuliert über optische Sensoren ein Ziel zu erfassen, zu verfolgen und mit dem Laser zu beleuchten. Eine solche Steuereinheit ist ausgeführt, Daten zur Zielerfassung übermittelt zu bekommen und die Position des Ziels an das Luftfahrzeug zurück zu melden. In diesem Fall wird das Luftfahrzeug die Außenlast als Zielbeleuchtungsvorrichtung erkennen und als solche ansteuern. Jedoch wird die zweite Steuereinheit eine entsprechende Umsetzung der übermittelten Kommandos vornehmen, so dass ein beliebiges anderes Funktionsmodul angesteuert wird.

Die Funktionsmodule können beispielsweise Sensoren, Kameras, Funksignalempfänger, Funksignalsender, Steuersysteme für unbemannte Flugkörper, RADAR-Systeme, oder ein Messsystem sein. Die Steuerdaten können von dem Luftfahrzeug über ein Bussystem an die Außenlast übertragen werden. Damit können unterschiedliche Funktionsmodule ohne Modifikationen an dem Luftfahrzeug betrieben werden.

Die Außenlast kann im Falle von abmontierten Funktionsmodulen mit Platzhaltergewichten bestückt werden, um einen gleichbleibenden Schwerpunkt und ein gleichbleibendes Gewicht der Außenlast zu gewährleisten.

'Die Außenlast kann mit einem beliebigen Luftfahrzeug verwendet werden, solange die erste Steuereinheit und das Gehäuse der Außenlast sowie die mechanische Kopplungselemente der Außenlast auf das Luftfahrzeug abgestimmt sind.

### Kurze Beschreibung der Figuren

Nachfolgend wird anhand der beigefügten Zeichnungen näher auf Ausführungsbeispiele der Erfindung eingegangen. Es zeigen:
Fig. 1 eine schematische Darstellung einer Außenlast gemäß einem Ausführungsbeispiel.
Fig. 2 eine schematische Darstellung eines Luftfahrzeugs mit einer Außenlast gemäß einem weiteren Ausführungsbeispiel.
Fig. 3 eine schematische Darstellung des Aufbaus eines Luftfahrzeugs mit einer Außenlast gemäß einem weiteren Ausführungsbeispiel.

### Detaillierte Beschreibung der Ausführungsbeispiele

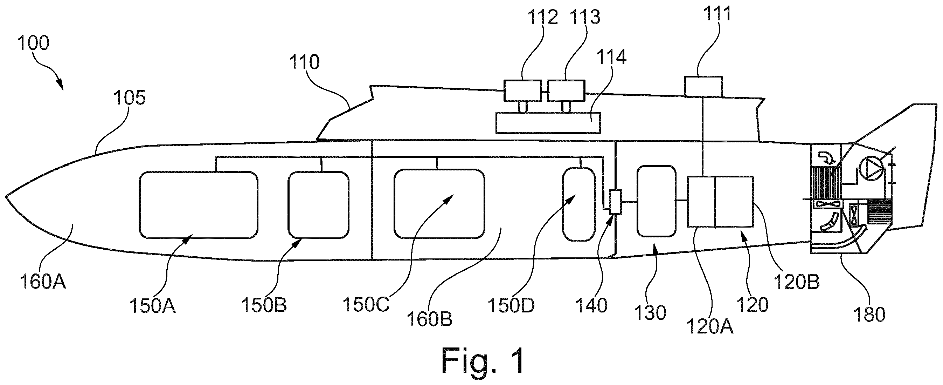

Fig. 1 zeigt eine Außenlast 100 mit einem Gehäuse 105. Das Gehäuse weist ein mechanisches Kopplungselement 110 auf, über welches die Außenlast 100 mit einem Luftfahrzeug mechanisch gekoppelt wird. An dem mechanischen Kopplungselement 110 sind drei Signalschnittstellen 111, 112, 113 angeordnet.

Über die Signalschnittstelle 111 verläuft der Datenaustausch zwischen dem Luftfahrzeug 200 und der Außenlast 100, beispielsweise gemäß dem Übertragungsprotokoll MIL-STD 1760. Diese Signalschnittstelle 111 ist die primäre Außenlastschnittstelle und mit der ersten Steuereinheit 120 verbunden. Die erste Steuereinheit 120 ist mit der zweiten Steuereinheit 130 verbunden. Ein Umsetzungsprotokoll wird über die Signalschnittstelle 111 und die erste Steuereinheit 120 an die zweite Steuereinheit 130 übertragen. Die Signalschnittstellen 112, 113 dienen als redundante Schnittstellen zum Übertragen von Außenlastinformationen und Steuerbefehlen zwischen dem Luftfahrzeug 200 und einer Außenlastenabwurfvorrichtung 114, welche als mechanisch lösbares Kopplungselement ausgeführt ist.

Die Außenlastabwurfvorrichtung 114 kann auch ausgeführt sein, sich dem Luftfahrzeug gegenüber als eine bestimmte Außenlast auszugeben bzw. zu simulieren, beispielsweise als Laserzielbeleuchtung, so dass das Luftfahrzeug die Außenlast über die Schnittstelle 111 so ansteuert, als handele es sich bei der Außenlast tatsächlich um die simulierte Außenlast. Damit kann sichergestellt werden, dass unabhängig von der tatsächlichen Außenlast, das über die Signalschnittstelle 111 übertragene Protokoll dem Steuerungsprotokoll der simulierten Außenlast entspricht, so dass eine entsprechende Umsetzung durch die zweite Steuereinheit 130 erfolgen kann.

Die erste Steuereinheit 120 kann funktional in eine Bilddateneinheit 120A und in ein Steuerelement 120B aufgeteilt sein. Die Bilddateneinheit 120A kann insbesondere Videosignale so aufbereiten, dass die Rückmeldungen der Funktionseinheiten in ein Videosignal zur Darstellung auf einer Anzeigeeinheit in dem Luftfahrzeug aufbereitet werden. Das Steuerelement 120B kann die von den Steuerelementen des Luftfahrzeugs empfangenen Befehle gemäß dem ersten vorgegebenen Eingangssignalprotokoll in Befehle gemäß dem ersten vorgegebenen Ausgangssignalprotokoll umsetzen. Das Steuerelement 120B kann insbesondere ausgeführt sein, Steuerbefehle gem. dem Übertragungsprotokoll Mil-STD 1553 zu empfangen.

Die erste Steuereinheit 120 ist mit der zweiten Steuereinheit 130 gekoppelt, so dass die Daten des ersten vorgegebenen Ausgangssignalprotokolls als Eingangssignale für die zweite Steuereinheit 130 dienen. Diese werden dann von der zweiten Steuereinheit 130 umgesetzt und über die Steuerschnittstelle 140 an ein Funktionsmodul 150A, 150B, 150C, 150D weitergeleitet.

Die zweite Steuereinheit 130 ist an die erste Steuereinheit 120 insbesondere rückwirkungsfrei angekoppelt. Dies bedeutet, dass die Arbeitsweise der ersten Steuereinheit 120 und deren Interaktion mit der Signalschnittstelle 111 durch das Vorhandensein der zweiten Steuereinheit 130 nicht beeinflusst werden. Die Daten des ersten vorgegebenen Ausgangssignalprotokolls werden für die Eingangssignale für die zweite Steuereinheit 130 nicht verändert.

Die Funktionsmodule 150A, 150B, 150C, 150D sind in einem ersten Nutzlastraum 160A und einem zweiten Nutzlastraum 160B angeordnet.

In dem Gehäuse 105 der Außenlast kann eine Kühleinheit 180 angeordnet sein, welche thermisch mit der ersten Steuereinheit 120, der zweiten Steuereinheit 130 und den Nutzlasträumen 160A, 160B gekoppelt ist, so dass die Kühleinheit 180 diese im Bedarfsfall kühlen kann.

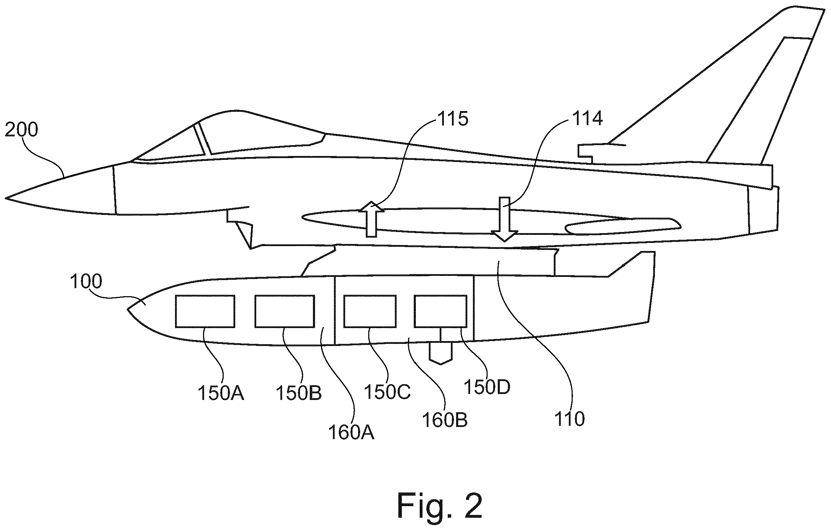

Fig. 2 zeigt ein Luftfahrzeug 200 mit einer Außenlast 100, welche im Unterbodenbereich des Luftfahrzeugs außen befestigt ist.

Das Gehäuse der Außenlast 100 kann mehrere Durchbrüche oder Ausnehmungen aufweisen, welche alternativ zu Metalldeckeln beispielsweise mit einem transparenten Material, beispielsweise Kunststoff, verschlossen sind, so dass Sensoren, welche in dem Gehäuse angeordnet sind, Daten aus der Umgebung durch die Durchbrüche erfassen können.

Das Luftfahrzeug 200 überträgt Steuerdaten 114 an die Außenlast und die Außenlast überträgt Rückgabedaten 115 an das Luftfahrzeug.

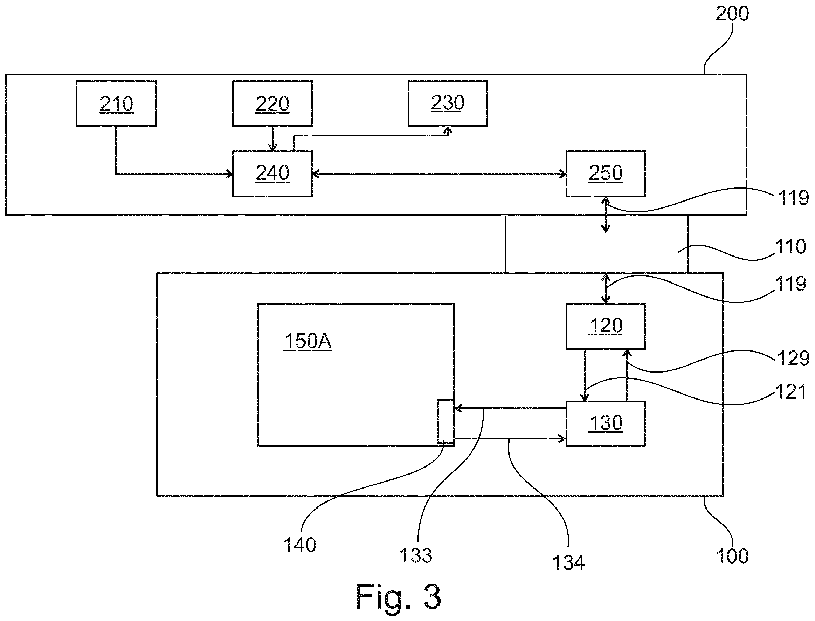

Fig. 3 zeigt den Datenfluss zwischen der Außenlast 100 und einem Luftfahrzeug 200 sowie die funktionale Kopplung dieser beiden.

In der generischen Darstellung des Luftfahrzeugs sind Sensorinformationen 210 von einem oder mehreren Sensoren, verschiedene Steuerungseingaben 220 von Eingabeinstrumenten wie Schaltern, Steuerknüppel und Leistungshebel, sowie eine Anzeigeeinheit 230 angeordnet und mit einer zentralen Recheneinheit 240 gekoppelt. Die zentrale Recheneinheit 240 stellt generisch die Gesamtheit der Recheneinheiten zur Avionik dar. Die zentrale Recheneinheit 240 ist mit einer Ausgabeschnittstelle 250 für Außenlasten gekoppelt, welche wiederum über das Kopplungselement 110 Daten an die erste Steuereinheit 120 überträgt bzw. Daten von der ersten Steuereinheit 120 entgegen nimmt.

Die an die erste Steuereinheit 120 übertragenen Daten werden als erstes vorgegebenes Eingangssignalprotokoll 119 bezeichnet und stellen die luftfahrzeugseitige Datenanbindung dar.

Die erste Steuereinheit 120 verarbeitet die gemäß dem ersten vorgegebenen Eingangssignalprotokoll 119 empfangenen Daten und stellt Daten gemäß dem ersten vorgegebenen Ausgangssignalprotokoll 121 zur Verfügung, die an der zweiten Steuereinheit 130 als zweites Eingangssignalprotokoll 121 anliegen. Die zweite Steuereinheit 130 setzt das zweite Eingangssignalprotokoll 121 in ein zweites Ausgangssignalprotokoll 133 um, welches an einer Übergabeschnittstelle 140 für die Anbindung des Funktionsmoduls 150A bereitgestellt wird.

Die Übergabeschnittstelle 140 ist insbesondere eine Übergabeschnittstelle für Signale zwischen der zweiten Steuereinheit 130 und einem Funktionsmodul. Dabei kann die Übergabeschnittstelle 140 sowohl an einer Stirnfläche eines Nutzraumes oder an einer Trennwand des Gehäuses 105 als auch an einem Funktionsmodul angeordnet sein. Funktional koppelt die Übergabeschnittstelle 140 die zweite Steuereinheit 130 mit einem oder mehreren Funktionsmodulen.

Steuerdaten 133 werden beispielsweise als diskrete Signale an ein Funktionsmodul 150A übertragen. Als Rückmeldungen 134 werden beispielsweise analoge Daten aus dem Funktionsmodul 150A über die Übergabeschnittstelle 140 an die Steuereinheit 130 übertragen.

Die Signalverbindungen zwischen den Funktionsblöcken 240, 250, 120, 130 und 150A sind als bidirektionale Verbindungen eingezeichnet, d.h. dass Daten in beide Richtungen übertragen werden.

Wird ein neues Funktionsmodul 150A bereitgestellt, so ist eine entsprechende Softwareanpassung der zweiten Steuereinheit 130 bereitzustellen, welche das gleichbleibende zweite Eingangssignalprotokoll 121 in das entsprechende zweite Ausgangssignalprotokoll 133 umsetzt bzw. die Rückmeldung 134 wird in das Signal 129 von der zweiten Steuereinheit 130 an die erste Steuereinheit 120 umgesetzt. Somit sind von einer Änderung in dem Funktionsmodul 150A oder insgesamt einer Änderung des Funktionsmoduls 150A nur die zweite Steuereinheit 130 sowie deren Anbindung an das Funktionsmodul 150A betroffen. Die erste Steuereinheit 120 sowie die Ausgabeschnittstelle 250 des Luftfahrzeugs bleiben unverändert.

## Patentansprüche

1. Außenlast (100) für ein Luftfahrzeug (200), die Außenlast aufweisend:
eine erste Steuereinheit (120), welche ausgeführt ist, mit dem Luftfahrzeug gekoppelt zu werden und Steuerdaten über ein erstes vorgegebenes Eingangssignalprotokoll (119) mit dem Luftfahrzeug auszutauschen;
einen ersten Nutzlastraum (160A) zur Aufnahme einer ersten Nutzlast (150A);
wobei die Außenlast (100) ausgeführt ist, sich gegenüber dem Luftfahrzeug als eine bestimmte simulierte Außenlast auszugeben und von dem Luftfahrzeug über das erste vorgegebene Eingangsprotokoll als die bestimmte simulierte Außenlast angesteuert zu werden;
wobei die erste Nutzlast als ein erstes Funktionsmodul zur Durchführung einer von der Funktion der bestimmten simulierten Außenlast abweichenden Funktion ausgeführt ist und wobei die Durchführung der Funktion von dem Luftfahrzeug durch Übertragung von Steuerdaten an die erste Steuereinheit (120) initiiert wird;
wobei die erste Steuereinheit ausgeführt ist, Steuerdaten gemäß einem ersten vorgegebenen Ausgangssignalprotokoll (121) auszugeben;
wobei die Außenlast (100) eine zweite Steuereinheit (130) aufweist;
wobei die zweite Steuereinheit (130) so angeordnet ist, dass die Steuerdaten gemäß dem ersten vorgegebenen Ausgangssignalprotokoll (121) als Eingangssignale für die zweite Steuereinheit (130) dienen; und
wobei die zweite Steuereinheit (130) ausgeführt ist, die von ihr empfangenen Eingangssignale (129) gemäß einem ersten Umsetzungsprotokoll in ein zweites Ausgangssignalprotokoll (131) umzusetzen und an ein Steuerprotokoll des ersten Funktionsmoduls anzupassen.

2. Außenlast (100) nach Anspruch 1,
wobei die zweite Steuereinheit (130) ausgeführt ist, ein zweites Umsetzungsprotokoll aufzunehmen.

3. Außenlast (100) nach Anspruch 1 oder 2,
aufweisend eine Konfigurationsschnittstelle (111);
wobei die Konfigurationsschnittstelle mit der zweiten Steuereinheit (130) gekoppelt ist und ausgeführt ist, ein Umsetzungsprotokoll an die zweite Steuereinheit (130) zu übertragen.

4. Außenlast (100) nach Anspruch 2 oder 3,
weiterhin aufweisend eine zweite Nutzlast (150B), welche als zweites Funktionsmodul ausgeführt ist;
wobei die zweite Steuereinheit (130) ausgeführt ist, das erste Funktionsmodul über das erste Umsetzungsprotokoll anzusteuern und das zweite Funktionsmodul über das zweite Umsetzungsprotokoll anzusteuern.

5. Außenlast (100) nach einem der Ansprüche 2 bis 4,
wobei die zweite Steuereinheit (130) ausgeführt ist, das erste Umsetzungsprotokoll und das zweite Umsetzungsprotokoll nebenläufig auszuführen.

6. Außenlast (100) nach einem der vorhergehenden Ansprüche,
wobei das Steuerprotokoll des ersten Funktionsmoduls aus diskreten Signalen besteht.

7. Außenlast (100) nach einem der vorhergehenden Ansprüche,
wobei über einen Rückkanal Daten von dem Funktionsmodul über die zweite Steuereinheit an die erste Steuereinheit übertragen werden und die erste Steuereinheit ausgeführt ist, die Daten des Rückkanals an das Luftfahrzeug zu übertragen.

8. Außenlast (100) nach einem der vorhergehenden Ansprüche,
weiterhin aufweisend ein Gehäuse (105);
wobei die erste Steuereinheit (120) und die zweite Steuereinheit (130) in dem Gehäuse angeordnet sind.

9. Luftfahrzeug (200),
aufweisend eine Außenlast (100) nach einem der vorhergehenden Ansprüche.

10. Luftfahrzeug (200) nach Anspruch 9,
wobei das Luftfahrzeug ausgeführt ist, Steuerdaten mit der ersten Steuereinheit auszutauschen, so dass durch das erste Funktionsmodul eine funktionsmodulspezifische Aktion ausgeführt wird.

## Claims

1. External load (100) for an aircraft (200), the external load having:
a first control unit (120) which is designed to be coupled to the aircraft and to exchange control data with the aircraft by means of a first predefined input signal protocol (119);
a first payload space (160A) for receiving a first payload (150A);
wherein the external load (100) is designed to be output as a specific simulated external load with respect to the aircraft and to be actuated by the aircraft as the specific simulated external load by means of the first predefined input protocol;
wherein the first payload is embodied as a first function module for carrying out a function which differs from the function of the specific simulated external load, and wherein the carrying out of the function is initiated by the aircraft by transmitting control data to the first control unit (120);
wherein the first control unit is designed to output control data in accordance with a first predefined output signal protocol (121);
wherein the external load (100) has a second control unit (130);
wherein the second control unit (130) is arranged in such a way that according to the first predefined output signal protocol (121) the control data serve as input signals for the second control unit (130);
wherein the second control unit (130) is designed to convert the input signals (129) received by it into a second output signal protocol (131) according to a first conversion protocol, and to adapt said input signals (129) to a control protocol of the first function module.

2. External load (100) according to Claim 1,
wherein the second control unit (130) is designed to receive a second conversion protocol.

3. External load (100) according to Claim 1 or 2, having a configuration interface (111);
wherein the configuration interface is coupled to the second control unit (130) and is designed to transmit a conversion protocol to the second control unit (130).

4. External load (100) according to Claim 2 or 3,
also having a second payload (150B) which is embodied as a second function module;
wherein the second control unit (130) is designed to actuate the first function module by means of the first conversion protocol and to actuate the second function module by means of the second conversion protocol.

5. External load (100) according to one of Claims 2 to 4,
wherein the second control unit (130) is designed to implement the first conversion protocol and the second conversion profile alongside one another.

6. External load (100) according to one of the preceding claims,
wherein the control protocol of the first function module is composed of discrete signals.

7. External load (100) according to one of the preceding claims,
wherein data are transmitted from the function module to the first control unit via the second control unit via a backchannel, and the first control unit is designed to transmit the data of the backchannel to the aircraft.

8. External load (100) according to one of the preceding claims,
also having a housing (105);
wherein the first control unit (120) and the second control unit (130) are arranged in the housing.

9. Aircraft (200),
having an external load (100) according to one of the preceding claims.

10. Aircraft (200) according to Claim 9,
wherein the aircraft is designed to exchange control data with the first control unit, with the result that the first function module executes a function-module-specific action.

## Revendications

1. Charge extérieure (100) pour un aéronef (200), la charge extérieure possédant :
une première unité de commande (120) qui est réalisée pour être couplée à l'aéronef et échanger des données de commande avec l'aéronef par le biais d'un premier protocole de signal d'entrée (119) prédéfini ;
un premier espace de charge utile (160A) destiné à accueillir une première charge utile (150A) ;
la charge extérieure (100) étant réalisée pour se comporter comme une charge extérieure simulée donnée par rapport à l'aéronef et être commandée par l'aéronef en tant que charge extérieure simulée donnée par le biais du premier protocole d'entrée prédéfini ;
la première charge utile étant réalisée sous la forme d'un premier module fonctionnel destiné à exécuter une fonction différente de la fonction de la charge extérieure simulée donnée et l'exécution de la fonction étant initiée par l'aéronef par la transmission de données de commande à la première unité de commande (120) ;
la première unité de commande étant réalisée pour délivrer des données de commande conformément à un premier protocole de signal de sortie (121) prédéfini ;
la charge extérieure (100) possédant une deuxième unité de commande (130) ;
la deuxième unité de commande (130) étant disposée de telle sorte que les données de commande conformément au premier protocole de signal de sortie (121) prédéfini servent de signaux d'entrée pour la deuxième unité de commande (130) ; et
la deuxième unité de commande (130) étant réalisée pour convertir les signaux d'entrée (129) qu'elle reçoit conformément à un premier protocole de conversion en un deuxième protocole de signal de sortie (131) et à les adapter à un protocole de commande du premier module fonctionnel.

2. Charge extérieure (100) selon la revendication 1, la deuxième unité de commande (130) étant réalisée pour accueillir un deuxième protocole de conversion.

3. Charge extérieure (100) selon la revendication 1 ou 2,
possédant une interface de configuration (111) ; l'interface de configuration étant connectée à la deuxième unité de commande (130) et réalisée pour transmettre un protocole de conversion à la deuxième unité de commande (130).

4. Charge extérieure (100) selon la revendication 2 ou 3,
possédant en outre une deuxième charge utile (150B) qui est réalisée sous la forme d'un deuxième module fonctionnel ;
la deuxième unité de commande (130) étant réalisée pour commander le premier module fonctionnel par le biais du premier protocole de conversion et le deuxième module fonctionnel par le biais du deuxième protocole de conversion.

5. Charge extérieure (100) selon l'une des revendications 2 à 4, la deuxième unité de commande (130) étant réalisée pour exécuter le premier protocole de conversion et le deuxième protocole de conversion en parallèle.

6. Charge extérieure (100) selon l'une des revendications précédentes, le protocole de commande du premier module fonctionnel étant composé de signaux discrets.

7. Charge extérieure (100) selon l'une des revendications précédentes, des données étant transmises par la deuxième unité de commande, par le biais d'un canal de retour, du module fonctionnel à la première unité de commande et la première unité de commande étant réalisée pour transmettre les données du canal de retour à l'aéronef.

8. Charge extérieure (100) selon l'une des revendications précédentes,
possédant en outre un boîtier (105) ;
la première unité de commande (120) et la deuxième unité de commande (130) étant disposées dans le boîtier.

9. Aéronef (200) possédant une charge extérieure (100) selon l'une des revendications précédentes.

10. Aéronef (200) selon la revendication 9, l'aéronef étant réalisé pour échanger des données de commande avec la première unité de commande de telle sorte qu'une action spécifique au module fonctionnel est exécutée par le premier module fonctionnel.
